# EUROPÄISCHE PATENTSCHRIFT

(11) **EP 4 069 646 B1**
(45) Veröffentlichungstag und Bekanntmachung des Hinweises auf die Patenterteilung: **29.01.2025**
(21) Anmeldenummer: 20820104.6
(22) Anmeldetag: 03.12.2020
(51) Int. Cl.: C02F 1/42, C02F 1/28

(54) **FILTERKERZE SOWIE SYSTEM MIT EINER FILTERKERZE ZUR AUFBEREITUNG VON WASSER**
FILTER CANDLE AND SYSTEM COMPRISING A FILTER CANDLE FOR PREPARING WATER
BOUGIE FILTRANTE ET SYSTÈME COMPRENANT UNE BOUGIE FILTRANTE POUR LE TRAITEMENT DE L'EAU

(30) Priorität: 05.12.2019 DE 102019133211
(43) Veröffentlichungstag der Anmeldung: 12.10.2022
(73) Patentinhaber: BWT Holding GmbH, 5310 Mondsee (AT)
(72) Erfinder: JOHANN, Jürgen, 5310 Mondsee (AT); HOFBAUER, Michael, 5020 Salzburg (AT); HITTENBERGER, Hannes, 5310 Tiefgraben (AT)
(74) Vertreter: Friderichs, Gunther
(86) Internationale Anmeldenummer: PCT/EP2020/084413
(87) Internationale Veröffentlichungsnummer: WO 2021/110808

(56) Entgegenhaltungen:
- WO-A1-2019/038621
- US-A1- 2003 196 948

## Beschreibung

### Gebiet der Erfindung

Die Erfindung betrifft eine Filterkerze zur Aufbereitung von Wasser, welche mit einem Ionenaustauschermaterial befüllt ist.

Weiter betrifft die Erfindung ein System zur Wasseraufbereitung, welches eine Filterkerze mit Filterkerzenkopf umfasst.

### Hintergrund der Erfindung

Systeme zur Wasseraufbereitung, welche eine Filterkerze umfassen, sind aus der Praxis bekannt. Insbesondere wird von der BWT AG unter dem Markennamen "Bestmax^{®}" ein System zur Wasseraufbereitung vertrieben. Das System umfasst einen Filterkopf, welcher an einer bauseitig vorhandenen Wasserleitung angeschlossen werden kann.

Eine mit einem Ionenaustauschermaterial befüllte Filterkerze wird über eine Schraubverbindung mit dem Filterkopf verbunden, wobei sodann Wasser durch die Filterkerze geleitet und dabei enthärtet wird.

Neben einer Enthärtung können derartige Filterkerzen auch einer Reinigung des Wassers dienen und beispielsweise Aktivkohle zur Entfernung von Keimen umfassen.

Das so aufbereitete Wasser wird insbesondere in Haushalt und Gastronomie zum Betrieb von Kaffeemaschinen und Automaten zur Herstellung von Heiß- und/oder Kaltgetränken verwendet.

Durch weicheres Wasser kann auch der Geschmack von Kaffee verbessert werden.

Vorstehend beschriebenes System kann eine Filterkerze mit einem Bypass umfassen, innerhalb der nur ein Teil des Wassers durch das Ionenaustauschermaterial geleitet wird. Über einen einstellbaren Bypassstrom, welcher nicht durch das Ionenaustauschermaterial geleitet wird, kann das gewünschte Maß der Enthärtung eingestellt werden. Insbesondere kann so das System den je nach Standort unterschiedlichen Wasserhärten angepasst werden.

Zur Zubereitung von Getränken wird der Härtegrad insbesondere auf weich bis mittelhart eingestellt. Eine nahezu vollständige Enthärtung des Wassers, insbesondere eine Gesamthärte von weniger als 0,5 °dH, ist dagegen unerwünscht. Insbesondere werden bei einer derart starken Enthärtung dem Wasser die Salze entzogen, so dass dieses, wie vollentsalztes Wasser, zum Trinken eher weniger geeignet ist.

Während weiches bis mittelhartes Wasser zur Zubereitung von Heißgetränken optimal ist, ist es für andere Küchengeräte, wie beispielsweise Dampfgarer, optimal, möglichst weiches, insbesondere nahezu vollentsalztes Wasser zu verwenden, um so Salz- und Kalkablagerungen zu verhindern.

Es wäre theoretisch möglich, je nachdem, welches Wasser benötigt wird, eine entsprechende Einstellung über den Bypass vorzunehmen, also beispielsweise diesen vollständig zu schließen, wenn Wasser für einen Dampfgarer benötigt wird. Dies ist allerdings umständlich, insbesondere werden Filterkerzen oft unter Tisch eingebaut.

Des Weiteren müsste jedes Mal beim Umstellen das hinter der Filterkerze in der Leitung vorhandene Wasser erst abgelassen werden, bevor Wasser mit dem geänderten Härtegrad austritt. Relevante Hintergrundunterlagen auf diesem Gebiet finden sich unter WO 2019/038621 A1 und US 2003/196948 A1.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, eine Filterkerze sowie ein System zur Wasseraufbereitung bereitzustellen, bei welchem auf einfache Weise Wasser mit zumindest zwei verschiedenen Härtegraden bereitgestellt und entnommen werden kann.

### Zusammenfassung der Erfindung

Die Aufgabe der Erfindung wird bereits durch eine Filterkerze zur Aufbereitung von Wasser durch ein System zur Aufbereitung von Wasser mit einer Filterkerze nach einem der unabhängigen Ansprüche gelöst.

Bevorzugte Ausführungsformen und Weiterbildungen der Erfindung sind dem Gegenstand der abhängigen Ansprüche, der Beschreibung sowie den Figuren zu entnehmen.

Die Erfindung betrifft eine Filterkerze zur Aufbereitung von Wasser, welche zum Verbinden mit einem Filterkopf ausgebildet ist.

Insbesondere betrifft die Erfindung eine Filterkerze mit einem Anschlusskopf, welcher beispielsweise ein Schraubgewinde umfasst, um mit dem Filterkopf gekoppelt zu werden.

Der Filterkopf ist zum bauseitigen Anschließen an der Wasserleitung ausgebildet.

Die Filterkerze kann so, wenn das Ionenaustauschermaterial verbraucht ist, leicht entnommen und gegen eine neue Filterkerze ausgetauscht werden.

Die Filterkerze umfasst ein Gehäuse, welches mit einem Ionenaustauschermaterial zur Enthärtung des aufzubereitenden Wassers befüllt ist.

Das Ionenaustauschermaterial kann beispielsweise als Ionenaustauscherharz in Granulatform vorliegen. Dieses ist z.B. mit Wasserstoff beladen, welcher gegen Alkali- und Erdalkaliionen im Wasser ausgetauscht wird.

Die Filterkerze umfasst einen Kopf mit einem Eingang und zumindest zwei Ausgängen.

Über den Eingang wird das aufzubereitende Wasser in die Filterkerze geleitet.

Über die Ausgänge kann, wenn Wasser an einer Verbrauchsstelle entnommen wird, das aufbereitete Wasser ausgeleitet werden.

Gemäß der Erfindung ist an einem ersten Ausgang der Filterkerze Wasser in den Filterkopf einleitbar, welches nahezu vollständig enthärtet ist und am zweiten Ausgang der Filterkerze Wasser, welches einem anderen Behandlungsschritt unterzogen wurde, z. B. durch Aktivkohle, in den Filterkopf einleitbar ist.

Die Filterkerze umfasst also zwei Ausgänge, wobei das Wasser innerhalb der Filterkerze unterschiedlich behandelt wird, um an den beiden Ausgängen einen jeweils anderen Härtegrad aufzuweisen.

Die Filterkerze ist also derart ausgebildet, dass an beiden Ausgängen Wasser zur Nutzung entnommen werden kann. Das Eingangswasser wird also über beide Filterstrecken aufbereitet. Dabei wird das Eingangswasser beim Leiten über zumindest eine Filterstrecke enthärtet. Beim Leiten über die andere Filterstrecke wird das Eingangswasser entweder weniger enthärtet als beim Leiten über die andere Filterstrecke oder gar keiner Enthärtung, sondern lediglich einer anderen Wasseraufbereitung unterzogen.

Dies ist gemäß einer Ausführungsform der Erfindung dadurch realisiert, dass die Filterkerze einen Bypass umfasst, über den Wasser, welches das Ionenaustauschermaterial durchlaufen hat, mit Wasser mischbar ist, welches nicht über das Ionenaustauschermaterial oder mit einer geringeren Verweilzeit oder über eine kürzere Strecke des Ionenaustauschermaterials geleitet wurde.

Es ist insbesondere vorgesehen, dass am zweiten Ausgang Wasser ausleitbar ist, welches mit dem aus dem Bypass austretenden Wasser gemischt wurde.

Vorzugsweise ist dieser Bypass über ein Stellelement einstellbar, so dass der Härtegrad des am zweiten Bypass ausgeleiteten Wassers einstellbar ist.

Das am ersten Auslass austretende Wasser wird dagegen vorzugsweise nicht mit Wasser des Bypasses vermischt. So kann am ersten Auslass Wasser bereitgestellt werden, welches wie mit der Filterkerze bauartbedingt maximal möglich enthärtet wurde und insbesondere, ähnlich wie vollentsalztes Wasser, derart wenige Salze und Mineralstoffe enthält, dass die Bildung von Ablagerungen in Geräten, in denen das Wasser verdampft wird, wie beispielsweise ein Dampfgarer, weitgehend vermieden wird. Die Filterkerze ist insbesondere derart ausbildet, dass bei bestimmungsgemäßem Gebrauch die Härte unter 1, vorzugsweise unter 0,5 °dH beträgt.

Bei einer Ausführungsform der Erfindung sind Eingang und der zweite Ausgang am Kopf der Filterkerze koaxial angeordnet.

Es ist aber auch möglich, dass der Eingang und der zweite Ausgang an demselben Kopf auf einer Seite der Filterkerze angeordnet sind.

Der erste Ausgang (mit dem maximal möglich enthärteten Wasser) ist gemäß einer Ausführungsform der Erfindung drehbar oben auf dem Filterkopf angeordnet.

Insbesondere ist der erste Ausgang als oben aus dem Filterkopf austretendes koaxiales Rohr ausgebildet, welches abgewinkelt zur Seite geführt ist.

Das Rohr ist vorzugsweise um mindestens 180°, besonders bevorzugt um 360°, um die Mittelachse des Filterkopfes drehbar.

So kann der erste Ausgang auf einfache Weise in Richtung der Entnahmestelle gedreht werden.

Es ist bei einer Ausführungsform vorgesehen, einen auf einer Mittelachse der Filterkerze angeordneten mittigen Eingang oder Ausgang bereitzustellen, welcher von zwei koaxialen Ringkanälen umgeben ist, über die jeweils Wasser entweder eingeleitet oder ausgeleitet werden kann.

Insbesondere ist vorgesehen, dass der Eingang zwischen dem ersten und dem zweiten Ausgang angeordnet ist.

Der erste Ausgang kann beispielsweise als mittiges Rohr ausgebildet sein, welchem sich radial der Eingang als Ringkanal und dem Eingang der zweite Ausgang als weiterer Ringkanal anschließt.

Es hat sich herausgestellt, dass sich so sowohl Filterkerze als auch Filterkopf besonders kompakt ausgestalten lassen.

Bei einer Weiterbildung der Erfindung umfasst die Filterkerze eine Mischkammer, in welcher durch das Ionenaustauschermaterial geleitetes Wasser mit dem Bypassstrom gemischt wird.

Die Mischkammer ist also vorgesehen, um das Wasser für den zweiten Ausgang bereitzustellen.

Gemäß einer Weiterbildung der Erfindung ist zwischen dem in der Filterkerze vorhandenen Ionenaustauschermaterial und der Mischkammer ein Rückflussverhinderer angeordnet.

Der Rückflussverhinderer verhindert, dass Bypasswasser in den zum ersten Ausgang führenden Wasserstrom gelangt.

So wird also sichergestellt, dass nur vollständig durch das Ionenaustauschermaterial geleitetes Wasser zum ersten Ausgang gelangt.

Der Rückflussverhinderer kann sich insbesondere ringförmig um ein mittig angeordnetes Rohr, insbesondere ein Fallrohr, erstrecken.

Weiter können auch mehrere Rückflussverhinderer um das mittig angeordnete Rohr verteilt sein.

Beispielsweise kann der Rückflussverhinderer plattenförmig ausgebildet sein und zumindest einen Deckel umfassen, welcher nur von in eine Richtung durchströmendes Wasser geöffnet werden kann und so als Rückflussverhinderer wirkt.

Der zumindest eine Deckel kann hierzu federnd gelagert sein und/oder aus federndem Material bestehen.

Zwischen dem Rückflussverhinderer und dem Ionenaustauschermaterial ist vorzugsweise zumindest eine Filterschicht angeordnet, welche das Ionenaustauschermaterial zurückhält.

Das Wasser des Bypasses durchläuft vorzugsweise eine Filterschicht.

Es ist insbesondere vorgesehen, dass das Wasser von vorstehend genannter Mischkammer aus durch eine Filterschicht läuft. Diese Filterschicht kann insbesondere Materialien zur Entfernung von Keimen und Schadstoffen umfassen. Insbesondere kann die Filterschicht Aktivkohle umfassen.

Die Bereitstellung des Bypasses innerhalb der Filterkerze hat den Vorteil, dass so das durch den Bypass geleitete Wasser auch eine Filterschicht der Filterkerze passieren kann. Dies wäre bei einer Bereitstellung des Bypasses über den Filterkopf nicht möglich.

Die Erfindung betrifft des Weiteren ein System zur Aufbereitung von Wasser mit einer Filterkerze.

Insbesondere betrifft die Erfindung ein System mit einer Filterkerze, wie diese vorstehend beschrieben wurde.

Das System umfasst ein Filterkopf, in welchen die Filterkerze eingesetzt ist.

Wie vorstehend ausgeführt, ist die Filterkerze mit einem Ionenaustauschermaterial befüllt.

Der Filterkopf umfasst einen Eingang und zumindest zwei Ausgänge.

Gemäß der Erfindung ist das System derart ausgebildet, dass das an einem ersten Ausgang entnehmbare Wasser stärker enthärtet ist als das an einem zweiten Ausgang entnehmbare Wasser.

Die Erfindung sieht also vor, das durch die Filterkerze geleitete Wasser beispielsweise in zwei Teilströme zu unterteilen, welche aufgrund einer unterschiedlichen Verweilzeit im Ionenaustauschermaterial und/oder aufgrund einer unterschiedlichen Behandlung zu zwei unterschiedlich enthärteten Wassersorten führen.

Vorzugsweise wird das am zweiten Ausgang bereitgestellte Wasser über einen Bypass erzeugt, über den enthärtetes Wasser mit Bypasswasser gemischt wird.

Der Bypass kann, wie vorstehend beschrieben, innerhalb der Filterkerze angeordnet sein.

Gemäß einer anderen Ausführungsform der Erfindung kann der Bypass auch im Filterkopf angeordnet sein.

Diese Ausführungsform der Erfindung hat den Vorteil, dass sich so die Filterkerze einfacher ausgestalten lässt. Insbesondere benötigt die Filterkerze lediglich einen Eingang und einen Ausgang.

Nachteilig bei dieser Ausführungsform der Erfindung ist allerdings, dass das durch den Bypass geleitete Wasser nicht durch innerhalb der Filterkerze vorhandene Medien aufbereitet werden kann.

Für vorstehend genannte erste Ausführungsform der Erfindung kann der Filterkopf ein Stellorgan aufweisen, mit dem ein in die Filterkerze greifendes Stellglied betätigbar ist, über welches das Strömungsverhältnis zwischen Hauptstrom und Bypassstrom einstellbar ist.

Es ist insbesondere vorgesehen, ein Stellglied bereitzustellen, welches axial über ein drehbares Betätigungsorgan verschoben werden kann und welches so eine oder mehrere Öffnungen eines Kanals der Filterkerze öffnen und schließen kann, um so die Stärke des Bypassstroms zu regeln.

Die Offenbarung betrifft des Weiteren einen Filterkopf, welcher für vorstehend beschriebenes System ausgebildet ist und welcher dementsprechend einen Einlass und zwei Auslässe umfasst.

Ansonsten kann der Filterkopf sämtliche vorstehend, im Zusammenhang mit dem Filterkopf beschriebenen Merkmale umfassen.

Insbesondere kann der Filterkopf ein Stellorgan zum Einstellen des Strömungsverhältnisses zwischen einem Haupt- und einem Bypassstrom umfassen, wobei sich das Stellorgan um einen mittig durch das Stellorgan herausgeführten Auslass erstreckt.

Bei dieser Ausführungsform ist also vorgesehen, dass ein Auslass, insbesondere der erste Auslass, über den Wasser ausgeleitet werden kann, welches nicht mit Wasser des Bypassstroms vermischt ist, zentral und vorzugsweise drehbar zu den anderen Anschlüssen angeordnet ist.

Um den Filterkopf kompakt und einfach auszugestalten, ist dieser Auslass oben aus dem Filterkopf herausgeführt und wird vom Stellorgan, welches insbesondere als verdrehbarer Ring ausgebildet sein kann, umgeben.

Bei einer weiteren Ausführungsform befindet sich ein Bypass im Filterkopf. Über den Bypass wird aus der Filterkartusche strömendes Wasser mit Eingangswasser gemischt. Dieses Wasser, welches dadurch weniger enthärtet ist, wird dem zweiten Ausgang zugeführt, während Wasser, welchem im Verhältnis weniger oder gar kein Eingangswasser zugefügt wurde, zum ersten Ausgang geleitet wird.

Bei dieser Ausführungsform kann auf eine Filterkerze mit zwei Auslässen verzichtet werden. Dafür wird das durch den Bypass fließende Wasser gar nicht aufbereitet. Diese Ausführungsform eignet sich daher besonders für Gegenden, in denen das Eingangswasser bereits für den menschlichen Verzehr einwandfrei ist.

Die Offenbarung betrifft auch einen Filterkopf.

Insbesondere betrifft die Offenbarung einen Filterkopf mit einem oder mehrerer vorstehend beschriebener Merkmale.

Der Filterkopf kann, muss aber nicht zwei Ausgänge aufweisen. Vielmehr kann der Filterkopf auch nur einen Ausgang aufweisen. In den Filterkopf ist eine Filterkerze mit zumindest einem Eingang und zumindest einem Ausgang einsetzbar, insbesondere einschraubbar ist.

Der Filterkopf umfasst einen koaxial zu einer Mittelachse angeordneten Ausgang, welcher drehbar ausgebildet ist.

Die Mittelachse wird insbesondere durch die Mittelachse eines Gewindes zum Einschrauben der Filterkerze definiert.

Der Ausgang ist insbesondere als abgewinkeltes drehbares Rohr ausgebildet. So kann der Ausgang auf einfache Weise in Richtung der Abnahmestelle gedreht werden.

Bei einer Weiterbildung erstreckt sich um den Ausgang ein Stellorgan für einen Bypass.

Es wird also ein Kanal für einen Ausgang durch das Stellorgan geführt.

Das Stellorgan kann insbesondere drehbar zur Einstellung eines Enthärtungsgrades ausgebildet sein.

Somit lässt sich ein kompakt gestalteter Filterkopf bereitstellen, welcher einfach und komfortabel anschließbar ist.

### Kurzbeschreibung der Zeichnungen

Der Gegenstand der Erfindung soll im Folgenden bezugnehmend auf ein Ausführungsbeispiel anhand der Zeichnungen Fig. 1 bis Fig. 13 näher erläutert werden.
Fig. 1 zeigt ein Ausführungsbeispiel eines erfindungsgemäßen Systems zur Aufbereitung von Wasser, welches eine Filterkerze umfasst, die an einen Filterkopf angeschlossen ist.
Fig. 2 zeigt das System in einer Seitenansicht.
Fig. 3 ist eine Schnittansicht entlang der Linie A-A gemäß Fig. 2.
Fig. 4 ist eine Detailansicht des Bereichs A der Fig. 3.
Fig. 5 ist eine weitere Seitenansicht des Systems.
Fig. 6 ist eine Schnittansicht entlang der Linie B-B der Fig. 5.
Fig. 7 ist eine Detailansicht des Bereichs B der Fig. 6.
Fig. 8 ist eine Draufsicht auf die Filterkerze von oben.
Fig. 9 ist eine Draufsicht auf den Filterkopf von unten.
Fig. 10 und Fig. 11 sind Längsschnitte der Filterkerze.
Fig. 12 ist ein axialer Schnitt des Filterkopfes und Fig. 13 ein Querschnitt im Bereich des Eingangs.

### Detaillierte Beschreibung der Zeichnungen

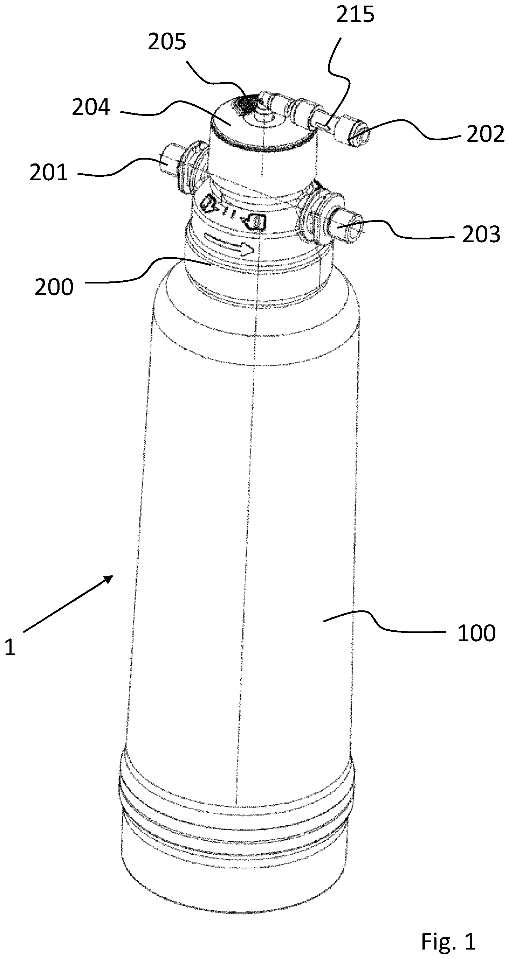

Fig. 1 zeigt in einer perspektivischen Ansicht ein System 1 zur Wasseraufbereitung.

Das System 1 umfasst eine Filterkerze 100, welche in einen Filterkopf 200 eingesetzt ist.

Der Filterkopf 200 dient einem bauseitigen Anschluss des Systems 1 und umfasst einen Eingang 201 zum Anschluss an einer bauseitigen Wasserleitung sowie zwei Ausgänge 202, 203, über die Wasser entnommen werden kann.

Die Ausgänge 202, 203 sind in dieser Ansicht auf der gegenüberliegenden Seite des Eingangs 201 angeordnet, wobei der Ausgang 202 um 360° drehbar ist, um in Richtung der Entnahmestelle ausgerichtet werden zu können.

Der Ausgang 202 ist oben aus dem Filterkopf 200 herausgeführt und ist sodann abgewinkelt ausgestaltet.

In diesem Ausführungsbeispiel dient der erste Ausgang 202 der Entnahme von Wasser, welches, wie mit der Filterkerze 100 maximal möglich, enthärtet ist und so wie vollentsalztes Wasser insbesondere für dampferzeugende Geräte, wie Dampfgarer, verwendet werden kann.

Über den zweiten Ausgang 203 kann teilenthärtetes Wasser entnommen werden, welches insbesondere für die Zubereitung von Getränken verwendet werden kann.

So kann der zweite Ausgang 203 beispielsweise mit einer Maschine zur Heißgetränkezubereitung, wie beispielsweise einem Kaffeevollautomaten, verbunden sein.

So kann entweder am ersten Ausgang 202 enthärtetes Wasser oder am zweiten Ausgang 203 teilenthärtetes Wasser entnommen werden oder auch an beiden Ausgängen 202, 203 gleichzeitig Wasser entnommen werden.

Der gewünschte Härtegrad des am Ausgang 203 ausgeleiteten Wassers kann über ein Stellorgan 204 eingestellt werden.

Das Stellorgan 204 wird durch Drücken des Sicherungsorgans 205 freigegeben und kann sodann verdreht werden, um den gewünschten Härtegrad einzustellen.

So wird insbesondere die Enthärtung auf den Härtegrad des Wassers am jeweiligen Standort angepasst. Normalerweise wird die Einstellung sodann nicht mehr verändert.

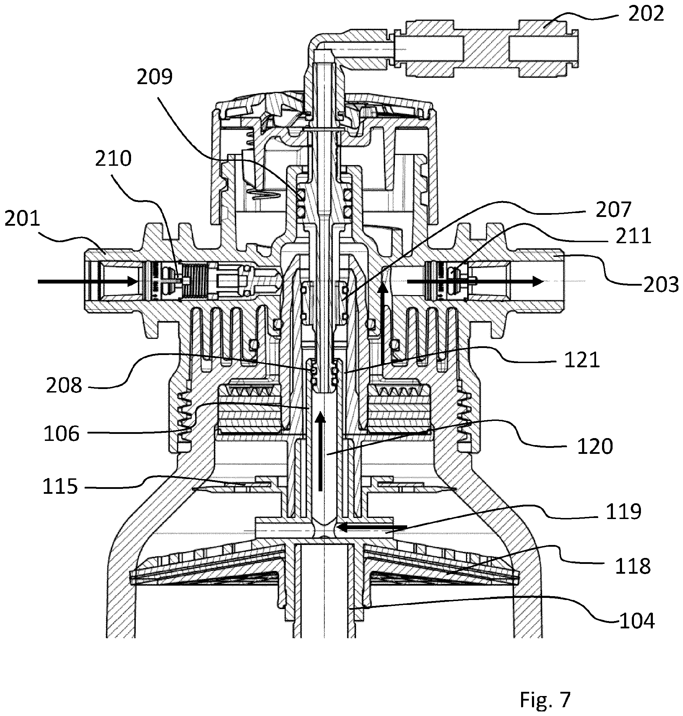

Ein in der Leitung des ersten Ausgangs 202 angeordneter Rückflussverhinderer 215 verhindert, dass enthärtetes Wasser zurücklaufen kann. Auch der zweite Ausgang umfasst einen Rückflussverhinderer (siehe Fig. 7, 211).

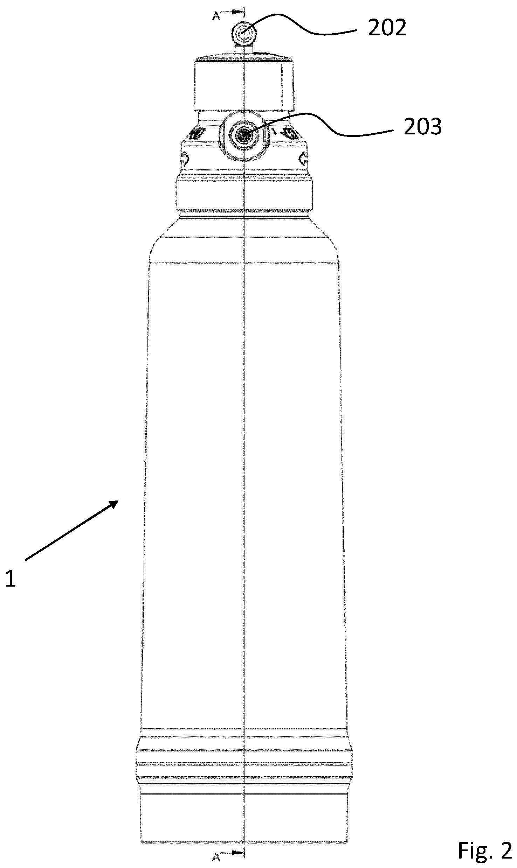

Fig. 2 ist eine Seitenansicht des Systems 1 in der Draufsicht auf die Auslässe 202 und 203.

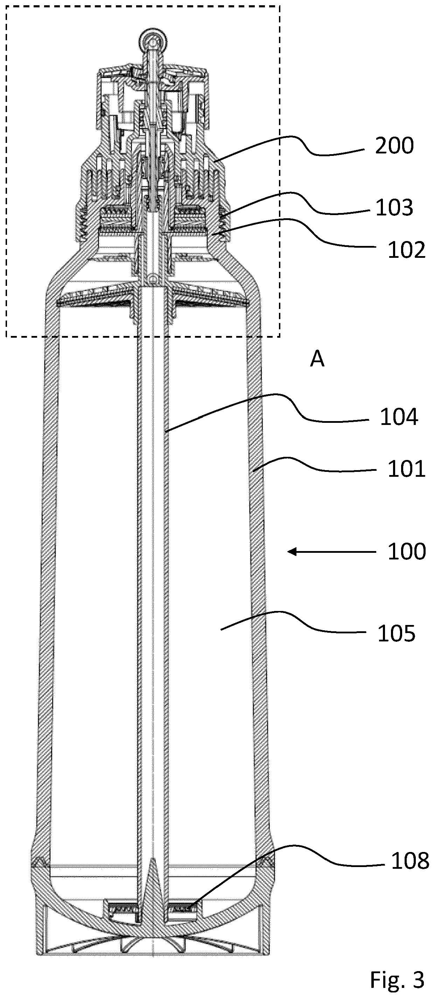

Fig. 3 ist eine Schnittansicht entlang der Linie A-A der Fig. 2.

Die Filterkerze 100 umfasst ein Gehäuse 101. Der Kopf 102 der Filterkerze 100 umfasst ein Gewinde 103, über das die Filterkerze mit dem Filterkopf 200 verbunden ist.

Über das Gehäuse wird ein Innenraum 105 bereitgestellt, welcher zumindest teilweise mit einem Enthärtungsmaterial, insbesondere mit einem schwach sauren Ionenaustauscherharz (nicht dargestellt), befüllt ist.

Über ein Fallrohr 104 wird aufzubereitendes Wasser ausgehend vom Filterkopf 200 in das Gehäuse 101 geleitet und tritt am Boden des Gehäuses über einen unteren Einlass 108, welcher eine Filterschicht umfassen kann, in den Innenraum 105.

Das Wasser durchläuft sodann das Ionenaustauschermaterial und wird, wie im Folgenden ausführlich dargestellt, ausgeleitet.

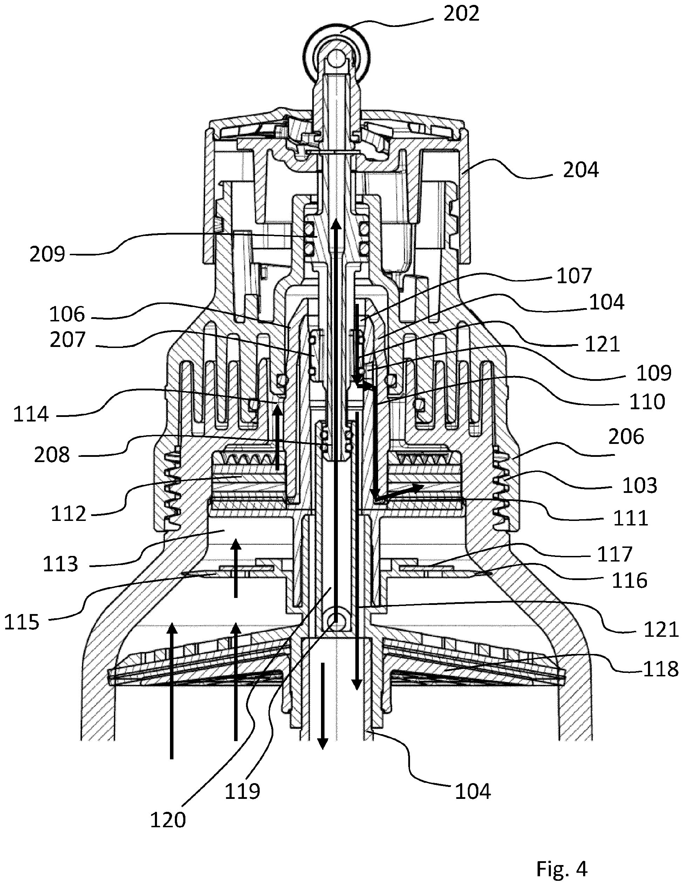

Fig. 4 ist eine Detaildarstellung des Bereichs A der Fig. 3, also des Bereiches des Kopfes 102 der Filterkerze 100 und des Filterkopfes 200.

Die Filterkerze 100 ist über das Gewinde 103 mit dem Gewinde 206 des Filterkopfes 200 verschraubt.

Die Filterkerze 100 umfasst einen Einlass 107, über den aufzubereitendes Wasser in die Filterkerze 100 eingeleitet wird.

Die Strömung des eingeleiteten Wassers ist mit Pfeilen auf der rechten Seite und die des ausgeleiteten Wassers mit Pfeilen auf der linken Seite mit Pfeilen dargestellt.

Der Einlass 107 wird durch das Fallrohr 104 ausgebildet, über das Wasser vom Filterkopf 200 in die Filterkerze 100 läuft.

Der mittige Kanal 120 dient der Ausleitung des Wassers zum Auslass 202.

Das Einlasswasser wird über den als Ringkanal ausgebildeten Kanal 121 in das Fallrohr 104 eingeleitet, von wo aus es nach unten geleitet wird und so das Ionenaustauschermaterial passiert.

Der mittige Kanal 120, welcher innerhalb der Filterkerze 100 durch ein Rohr 106 gebildet wird, ist innerhalb des Fallrohrs 104 angeordnet. Zwischen dem Rohr 106 und dem Fallrohr 104 befindet sich ein Ringkanal, über den Wasser nach unten strömen kann.

Die Filterkerze 100 umfasst einen Bypass, welcher als zumindest eine Öffnung 109 des Fallrohres 104 ausgebildet ist.

Durch die Öffnung 109 kann randseitig ein Teil des Wassers aus dem Fallrohr 104 austreten und wird über den Kanal 110 in eine Mischkammer 113 eingeleitet, welche teilweise mit zumindest einer Filterschicht 112 ausgefüllt ist.

Der Bypass 109 ist einstellbar, indem über das Stellorgan 204 mittels einer Gewindespindel das Stellglied 207 axial verschoben wird.

Der Kanal 120, welcher zum zweiten Ausgang 202 führt, verläuft auch durch das Stellglied 207.

Durch Hoch- und Runterfahren des Stellglieds 207 kann der offene Querschnitt der Öffnung 109 verändert werden, so dass diese einen einstellbaren Bypass bildet.

Es versteht sich, dass statt einer Öffnung 109 auch mehrere Öffnungen vorhanden sein können, welche nacheinander geöffnet oder verschlossen werden.

Von der Öffnung 109 fließt das Bypasswasser über den Ringkanal 110 und über den Kanalausgang 111 tritt der Bypassstrom aus und vermischt sich mit dem aufströmenden Wasser aus der Filterkerze 100.

Das von Eingang 201 strömende Wasser über den Einlass 107 über das Fallrohr 104 in den Innenraum 105 geleitet, steigt dort wieder auf durchläuft dabei das Ionenaustauschermaterial.

Das aufsteigende Wasser vermischt sich in der Mischkammer 113 mit dem Bypasswasser.

Über den Kanal 114, welcher zum zweiten Auslass 203 des Filterkopfes 200 führt, wird Wasser ausgeleitet. Der Kanal 114 ist als Ringkanal ausgebildet und erstreckt sich um das Fallrohr 104.

Die Filterkerze 100 hat also einen Einlass 107, welcher in einen Ringkanal zwischen dem Rohr 106 und dem Fallrohr 104 übergeht sowie einen ebenfalls als Ringkanal 114 ausgebildeten Auslass, welcher sich um das Fallrohr 104 erstreckt und welcher im verbundenen Zustand zum zweiten Ausgang 203 des Filterkopfes 200 führt.

Der mittige axiale Kanal 120 bildet den Auslass der Filterkerze 100 und führt zum ersten Ausgang 202 des Filterkopfes 200.

Das durch den Kanal 120 strömende Wasser wird nicht mit dem Bypassstrom gemischt, sondern tritt nach Durchlaufen des Ionenaustauschermaterials über den Eingang 119 in den Kanal 120 ein.

Um eine Strömung von Bypasswasser zum Kanal 120 zu verhindern, ist zwischen der Mischkammer 113 und dem Eingang 119 ein Rückflussverhinderer 115 angeordnet.

Der Rückflussverhinderer 115 ist in diesem Ausführungsbeispiel als ringförmige, sich durch das Gehäuse erstreckende Platte 116 ausgebildet.

Die Platte 116 ist mit einem oder mehreren federnden Deckeln 117 versehen.

Es kann insbesondere ein einziger ringförmiger Deckel 117 oder mehrere um den Umfang verteilte Deckel 117 verwendet werden, durch welche die Öffnungen der Platte 116 verschlossen werden.

Der oder die Deckel 117 sind biegsam ausgebildet und/oder federnd gelagert und können aufströmendem Wasser, welches in die Mischkammer 113 fließt, ausweichen.

Wird dagegen am ersten Auslass 202 Wasser entnommen, so wird sitzt der oder die Deckel 117 auf der Platte 116 auf, was verhindert, dass Wasser aus der Mischkammer 113 und damit Bypasswasser in den Eingang 119 gelangt.

Zwischen dem Rückflussverhinderer 115 und dem Ionenaustauschermaterial ist in diesem Ausführungsbeispiel mindestens eine Filterschicht 118 angeordnet. Diese hält das als Granulat ausgebildete Ionenaustauschermaterial zurück.

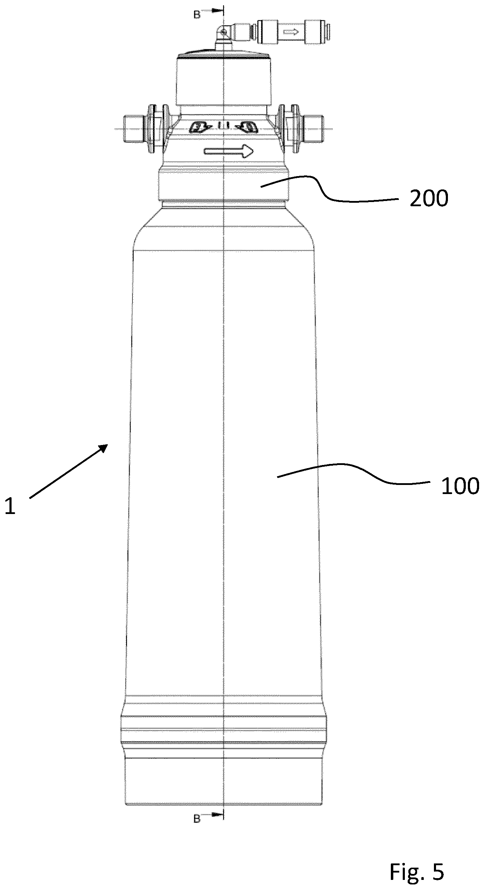

Fig. 5 ist eine weitere Seitenansicht des aus Filterkerze 100 und Filterkopf 200 bestehenden Systems 1 zur Aufbereitung von Wasser.

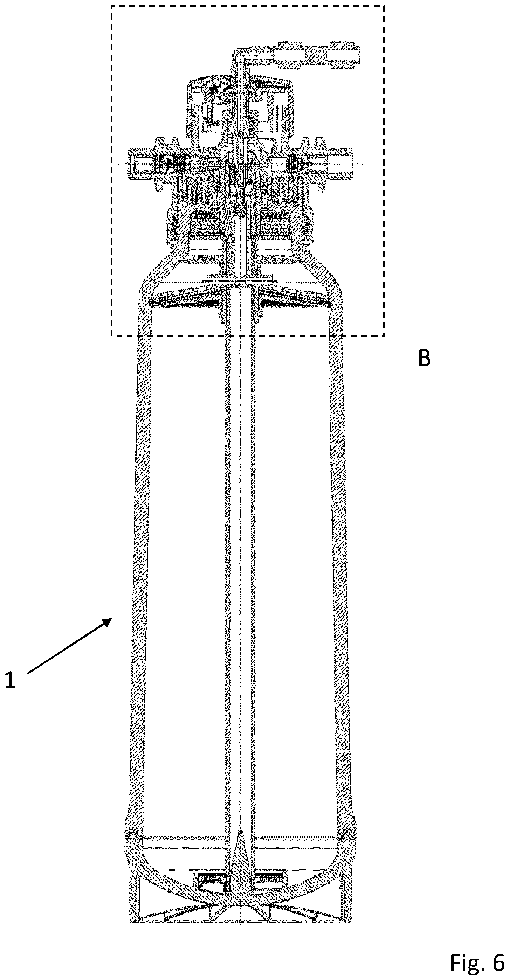

Fig. 6 ist eine Schnittansicht entlang der Linie B-B der Fig. 5.

Fig. 7 ist eine Detailansicht des Bereichs B der Fig. 6.

In dieser Ansicht verläuft der Schnitt entlang der Rohre, welche den Eingang 201 und die beiden Ausgänge 202, 203 bilden.

Strömungsseitig hinter dem Eingang 201 ist ein Rückflussverhinderer 210 angeordnet.

Ebenso befindet sich ein Rückflussverhinderer 211 vor dem Ausgang 203.

In dieser Ansicht ist zu erkennen, dass unterhalb des Rückflussverhinderers 115 der Filterkerze über den Eingang 119 Wasser in den Kanal 120 strömen kann, welches sodann durch den Kanal 120, welcher durch die Dichtung 208 und das Stellglied 207 führt, zum Ausgang 202 gelangt.

Die Dichtung 208 greift in verbundenem Zustand in das Rohr 106 und verbindet so den mittigen Auslass der Filterkerze 100 mit dem Ausgang 202 des Filterkopfes 200.

Wie vorstehend beschrieben, ist dieses Wasser nicht mit Bypasswasser versetzt und kann so insbesondere für dampferzeugende Geräte verwendet werden.

Das einströmende Wasser strömt dagegen durch den Ringkanal 121 entlang des Fallrohrs 104. Dieser Ringkanal 121 erstreckt sich bis zum Eingang 119 in den Kanal 120, welcher seitlich aus dem Fallrohr 104 herausgeführt ist. Weiter nach unten erstreckt sich sodann nur noch das Fallrohr 104.

Die Dichtung 209, durch die ebenfalls der Kanal 120 führt, dichtet den Einlass 107 nach außen ab.

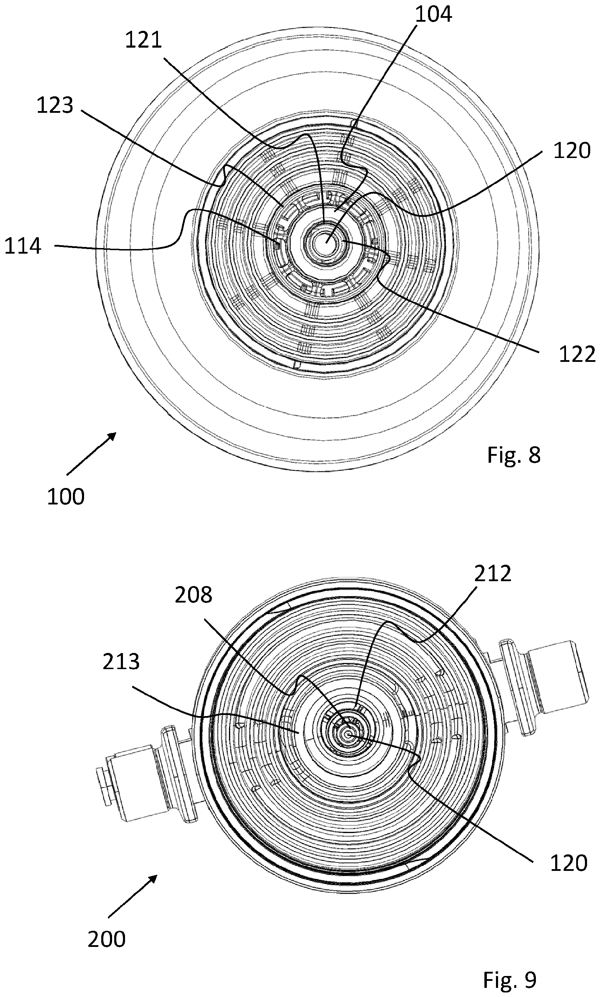

Fig. 8 ist eine Draufsicht auf die Filterkerze 100 von oben.

In der Mitte befindet sich der Kanal 120, welcher innerhalb der Filterkerze 100 durch das Rohr 122 gebildet wird und welcher den ersten Ausgang der Filterkerze 100 bildet.

In das Rohr 122 greift im verbundenen Zustand die insbesondere in der Draufsicht des Filterkopfes 200 gemäß Fig. 9 auf seine Unterseite zu sehende Dichtung 208, über die der Kanal 120 in den Filterkopf 200 übergeht.

Um das Rohr 122 erstreckt sich der Ringkanal 121, welcher durch das Fallrohr 104 gebildet wird.

Dass Fallrohr 104 steht weiter nach oben das das innere Rohr 122. So kann oberhalb des inneren Rohrs 122 der Bypass 109 im Fallrohr 104 angeordnet sein.

Um das Fallrohr 104 erstreckt sich wiederum der Ringkanal 114, welcher durch das sich um das Fallrohr erstreckende äußere Rohr 123 gebildet wird. Dieser Ringkanal 114 dient als zweiter Ausgang der Filterkerze 100.

Der Filterkopf 200 ist komplementär ausgebildet und umfasst einen inneren Ringkanal 212, über den Wasser in das Fallrohr 104 strömt und einen äußeren Ringkanal 213, über den Wasser zum zweien Ausgang 203 strömt.

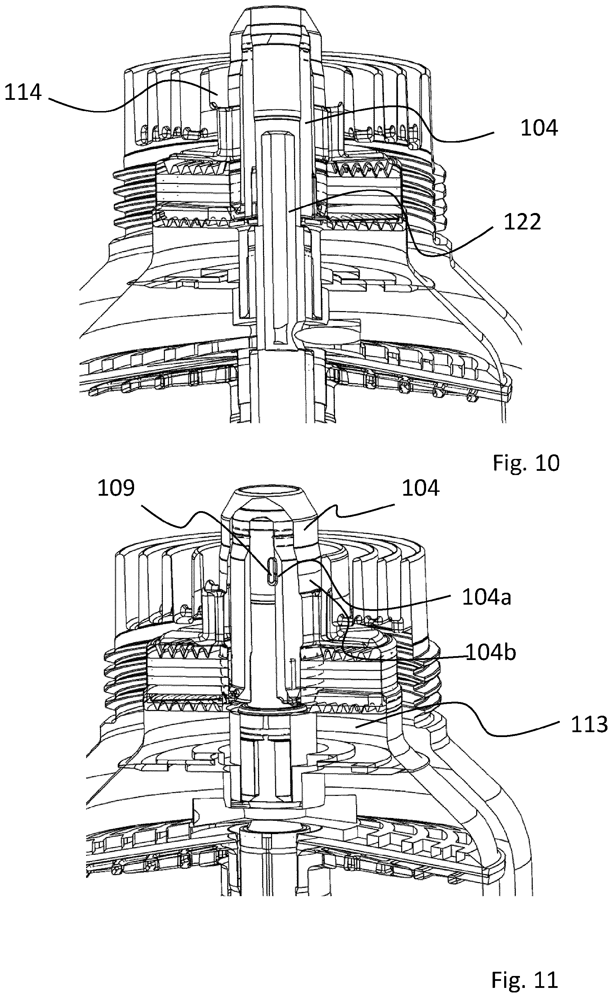

Fig. 10 ist eine axiale Schnittansicht des Kopfes 102 der Filterkerze 100.

Im Fallrohr 104 sitzt beabstandet weiter innen das Rohr 122, so dass im oberen Bereich des Fallrohrs 104 das Stellglied 207 des Filterkopfes 200 in das Fallrohr greifen kann.

Um das Fallrohr 104 erstreckt sich der Ringkanal 114 des zweiten Ausgangs.

Fig. 11 eine Schnittansicht, bei welcher gegenüber Fig. 10 die Schnittebene parallel versetzt ist.

Zu erkennen ist, dass das Fallrohr 104 zumindest abschnittsweise zweiwandig ausgebildet ist. Zwischen der Innenwand 104a und der Außenwand 104b ist ein Spalt ausgebildet, der einen Kanal 110 (siehe Fig. 4) bildet, durch den Bypasswasser aus der Öffnung 109 der Innenwand 104a in die Mischkammer 113 fließen kann.

Der Querschnitt der Öffnung 109 lässt sich über das Stellglied 207 verändern.

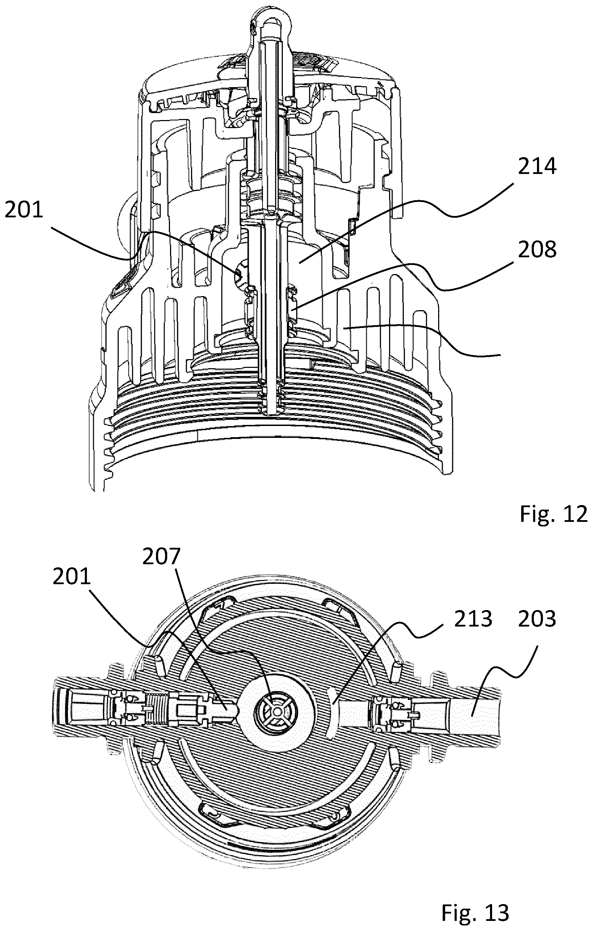

Fig. 12 ist axialer Schnitt und Fig. 13 ein Querschnitt des Filterkopfes 200 im Bereich von Eingang 201 und zweitem Ausgang 203.

Der Eingang 201 führt in eine Aufnahme 214 für das Fallrohr 104, welches den Einlass 107 der Filterkerze 100 umfasst.

Wie in Fig. 13 dargestellt für der äußere Kanal 203 des Kopfes 200 zum zweiten Ausgang 203.

Durch die Erfindung konnte ein kompakt ausgebildetes System zur Wasseraufbereitung bereitgestellt werden, bei welchem zusätzlich zu einem Ausgang, an dem Wasser insbesondere für Getränke bereitgestellt wird, ein weiterer Ausgang vorhanden ist, an dem stärker enthärtetes Wasser entnommen werden kann, welches z.B. für Geräte zur Dampferzeugung verwendet wird.

### Bezugszeichenliste

- 1: System zur Wasseraufbereitung
- 100: Filterkerze
- 101: Gehäuse
- 102: Kopf
- 103: Gewinde
- 104: Fallrohr
- 104a: Innenwand des Fallrohrs
- 104b: Außenwand des Fallrohrs
- 105: Innenraum
- 106: Rohr
- 107: Einlass der Filterkerze
- 108: unterer Einlass
- 109: Öffnung/Bypass
- 110: Kanal/Ringkanal
- 111: Kanalausgang
- 112: Filterschicht
- 113: Mischkammer
- 114: Kanal/Ringkanal
- 115: Rückflussverhinderer
- 116: Platte
- 117: Deckel
- 118: Filterschicht
- 119: Eingang
- 120: Kanal
- 121: Kanal/Ringkanal
- 122: Rohr
- 123: äußeres Rohr
- 200: Filterkopf
- 201: Eingang
- 202: erster Ausgang
- 203: zweiter Ausgang
- 204: Stellorgan
- 205: Sicherungsorgan
- 206: Gewinde
- 207: Stellglied
- 208: Dichtung
- 209: Dichtung
- 210: Rückflussverhinderer Eingang
- 211: Rückflussverhinderer zweiter Ausgang
- 212: Ringkanal
- 213: Ringkanal/Kanal
- 214: Aufnahme
- 215: Rückflussverhinderer erster Ausgang

## Patentansprüche

1. Filterkerze zur Aufbereitung von Wasser, welche zum Verbinden mit einem Filterkopf ausgebildet ist, wobei die ein Gehäuse umfasst, welches mit einem Ionenaustauschermaterial zur Enthärtung des aufzubereiteten Wassers befüllt ist, wobei die Filterkerze einen Kopf mit einem Eingang und zumindest zwei Ausgängen aufweist, wobei an einem ersten Ausgang Wasser in den Filterkopf einleitbar ist, welches stärker enthärtet ist, als Wasser, welches an einem zweiten Ausgang in den Filterkopf einleitbar ist.

2. Filterkerze nach dem vorstehenden Anspruch, **dadurch gekennzeichnet, dass** die Filterkerze einen Bypass umfasst, über den Wasser, welches das Ionenaustauschermaterial durchlaufen hat, mit Wasser mischbar ist, welches nicht oder in einer geringen Verweilzeit über das Ionenaustauschermaterial geleitet wurde.

3. Filterkerze nach einem der vorstehenden Ansprüche, **dadurch gekennzeichnet, dass** das Wasser am zweiten Ausgang nicht enthärtet ist, wobei dieses insbesondere über eine Filterschicht der Filterkerze mit Aktivkohle geleitet wurde.

4. Filterkerze nach einem der Ansprüche 2 oder 3, **dadurch gekennzeichnet, dass** der Bypass über ein Stellelement des Filterkopfes einstellbar ist.

5. Filterkerze nach einem der vorstehenden Ansprüche, **dadurch gekennzeichnet, dass** Eingang und Ausgänge am Kopf der Filterkerze koaxial angeordnet sind.

6. Filterkerze nach dem vorstehenden Anspruch, **dadurch gekennzeichnet, dass** der Eingang zwischen dem ersten und dem zweiten Ausgang angeordnet ist.

7. Filterkerze nach einem der Ansprüche 2 bis 6, **dadurch gekennzeichnet, dass** zwischen einer Mischkammer, in welcher durch das Ionenaustauschermaterial geleitetes Wasser mit dem Bypassstrom gemischt wird und dem Ionenaustauschermaterial ein oder mehrere Rückflussverhinderer angeordnet ist/sind.

8. Filterkerze nach einem der Ansprüche 2 bis 6, **dadurch gekennzeichnet, dass** das Wasser des Bypasses eine Filterschicht durchläuft.

9. System zur Wasseraufbereitung mit einer Filterkerze nach einem der vorstehenden Ansprüche, und einem Filterkopf, in welchen die Filterkerze eingesetzt ist, wobei die Filterkerze mit einem Ionenaustauschermaterial befüllt ist, und wobei der Filterkopf einen Eingang und zumindest zwei Ausgänge aufweist, wobei das System derart ausgebildet ist, dass das an einem ersten Ausgang entnehmbare Wasser stärker enthärtet, ist als das an einem zweiten Ausgang entnehmbare Wasser.

10. System nach dem vorstehenden Anspruch, **dadurch gekennzeichnet, dass** das System einen Bypass aufweist, über den durch das Ionenaustauschermaterial geleitete Wasser mit Wasser gemischt wird, welches nicht durch das Ionenaustauschermaterial geleitet wurde oder mit einer geringeren Verweilzeit durch das Ionenaustauschermaterial geleitet wurde.

11. System nach einem der vorstehenden Ansprüche, **dadurch gekennzeichnet, dass** das Wasser des ersten und des zweiten Ausgangs durch eine Filterschicht der Filterkerze, insbesondere durch eine Filterschicht mit Aktivkohle, geleitet wird.

12. System nach dem vorstehenden Anspruch, **dadurch gekennzeichnet, dass** der Bypass im Filterkopf und/oder in der Filterkerze angeordnet ist.

13. System nach dem vorstehenden Anspruch, **dadurch gekennzeichnet, dass** der Filterkopf ein Stellorgan aufweist, mit dem ein in die Filterkerze greifendes Stellglied betätigbar ist, über welches das Strömungsverhältnis zwischen Hauptstrom und Bypassstrom einstellbar ist.

14. System nach einem der vorstehenden Ansprüche, **dadurch gekennzeichnet, dass** ein Ausgang, insbesondere der erste Ausgang, koaxial zu einer Mittelachse des Filterkopfes ausgerichtet und/oder drehbar am Filterkopf angeordnet ist.

## Claims

1. A filter candle for treating water, adapted for being connected to a filter head, comprising a housing that is filled with an ion exchange material for softening the water to be treated, wherein the filter candle has a head with one inlet and at least two outlets, wherein water that can be introduced into the filter head at a first outlet is more softened than water that can be introduced into the filter head at a second outlet.

2. The filter candle of the preceding claim, wherein the filter candle comprises a bypass which allows to mix water that has passed through the ion exchange material with water that was not passed through the ion exchange material or was passed therethrough with a shorter dwell time.

3. The filter candle as claimed in any of the preceding claims, wherein the water at the second outlet is has not been softened, but was in particular passed through an activated carbon filter layer of the filter candle.

4. The filter candle as claimed in any of claims 2 or 3, wherein the bypass can be adjusted by means of a control element on the filter head.

5. The filter candle as claimed in any of the preceding claims, wherein the inlet and the outlets at the head of the filter candle are arranged coaxially.

6. The filter candle of the preceding claim, wherein the inlet is arranged between the first and the second outlet.

7. The filter candle as claimed in any of the claims 2 - 6, wherein one or more backflow preventer(s) is/are arranged between a mixing chamber, where water that passed through the ion exchange material is mixed with the bypass flow, and the ion exchange material.

8. The filter candle as claimed in any of the claims 2 - 6, wherein the bypass water passes through a filter layer.

9. A system for water treatment, comprising a filter candle as claimed in any of the preceding claims, and a filter head in which the filter candle is installed, wherein the filter candle is filled with an ion exchange material and wherein the filter head has one inlet and at least two outlets, wherein the system is designed such that the water that can be extracted at a first outlet is softened to a greater extent than the water that can be extracted at a second outlet.

10. The system of the preceding claim, wherein the system comprises a bypass which allows water that has passed through the ion exchange material to be mix with water that was not passed through the ion exchange material or was passed therethrough with a shorter dwell time.

11. The system as claimed in any of the preceding claims, wherein the water of the first and second outlets is passed through a filter layer of the filter candle, in particular through an activated carbon filter layer.

12. The system of the preceding claim, wherein the bypass is located in the filter head and/or in the filter candle.

13. The system of the preceding claim, wherein the filter head comprises a control element which is operable to actuate an actuator which engages in the filter candle and through which the flow ratio between the main flow and the bypass flow can be adjusted.

14. The system as claimed in any of the preceding claims, wherein one outlet, in particular the first outlet, is aligned coaxially to a central axis of the filter head and/or is arranged so that it can be turned on the filter head.

## Revendications

1. Bougie filtrante pour le traitement de l'eau, conçue pour être reliée à une tête de filtre, comprenant un boîtier rempli d'un matériau échangeur d'ions pour adoucir l'eau à traiter, la bougie filtrante présentant une tête avec une entrée et au moins deux sorties, l'eau qui peut être introduite dans la tête de filtre au niveau d'une première sortie étant plus adoucie que l'eau qui peut être introduite dans la tête de filtre au niveau d'une seconde sortie.

2. Bougie filtrante selon la revendication précédente, **caractérisée en ce que** la bougie filtrante comprend une dérivation par laquelle l'eau qui a traversé le matériau échangeur d'ions peut être mélangée avec de l'eau qui n'a pas traversé le matériau échangeur d'ions ou qui a traversé celui-ci avec un temps de séjour court.

3. Bougie filtrante selon l'une quelconque des revendications précédentes, **caractérisée en ce que** l'eau à la deuxième sortie n'est pas adoucie, celle-ci étant notamment traversé une couche filtrante à charbon actif de la bougie filtrante.

4. Bougie filtrante selon l'une quelconque des revendications 2 ou 3, **caractérisée en ce que** la dérivation peut être réglé au moyen d'un élément de réglage de la tête de filtre.

5. Bougie filtrante selon l'une quelconque des revendications précédentes, **caractérisée en ce que** l'entrée et les sorties sont disposées coaxialement à la tête de la bougie filtrante.

6. Bougie filtrante selon la revendication précédente, **caractérisée en ce que** l'entrée est disposée entre la première et la deuxième sortie.

7. Bougie filtrante selon l'une quelconque des revendications 2 à 6, **caractérisée en ce qu'**un ou plusieurs dispositifs anti-retour sont disposés entre une chambre de mélange, dans laquelle l'eau qui a traversé le matériau échangeur d'ions est mélangée avec le débit de dérivation, et le matériau échangeur d'ions.

8. Bougie filtrante selon l'une quelconque des revendications 2 à 6, **caractérisée en ce que** l'eau de dérivation traverse une couche filtrante.

9. Système de traitement de l'eau, comprenant une bougie filtrante selon l'une quelconque des revendications précédentes, et une tête de filtre dans laquelle la bougie filtrante est installée, la bougie filtrante étant remplie d'un matériau échangeur d'ions, et la tête de filtre présentant une entrée et au moins deux sorties, le système étant conçu de telle sorte que l'eau pouvant être extraite à une première sortie soit davantage adoucie que l'eau pouvant être extraite à une deuxième sortie.

10. Système selon la revendication précédente, **caractérisé en ce que** le système comprend une dérivation par laquelle l'eau qui a traversé le matériau échangeur d'ions est mélangée avec de l'eau qui n'a pas traversé le matériau échangeur d'ions ou qui a traversé le matériau échangeur d'ions avec un temps de séjour plus court.

11. Système selon l'une quelconque des revendications précédentes, **caractérisé en ce que** l'eau des première et deuxième sorties passe à travers une couche filtrante de la bougie filtrante, en particulier à travers une couche filtrante à charbon actif.

12. Système selon la revendication précédente, **caractérisé en ce que** la dérivation est situé dans la tête de filtre et/ou dans la bougie filtrante.

13. Système selon la revendication précédente, **caractérisé en ce que** la tête de filtre comprend un organe de réglage avec lequel on peut actionner un actionneur qui s'engage dans la bougie filtrante et par lequel le rapport de débit entre le débit principal et le débit de dérivation peut être réglé.

14. Système selon l'une quelconque des revendications précédentes, **caractérisé en ce qu'**une sortie, en particulier la première sortie, est alignée coaxialement avec un axe central de la tête de filtre et/ou est agencée de manière rotative sur la tête de filtre.
